# FASCICULE DE BREVET EUROPEEN

(11) **EP 1 155 313 B1**
(45) Date de publication et mention de la délivrance du brevet: **07.07.2004**
(21) Numéro de dépôt: 99954084.2
(22) Date de dépôt: 08.11.1999
(51) Int. Cl.: G01N 27/90, G01B 7/14

(54) **PROCEDE ET DISPOSITIF DE MESURE IN SITU DE LA DISTANCE ENTRE DEUX ELEMENTS DONNES DANS UNE CONDUITE TUBULAIRE**
VERFAHREN UND VORRICHTUNG ZUR IN-SITU MESSUNG DES ABSTANDES ZWISCHEN ZWEI ELEMENTEN IN EINER ROHRLEITUNG
METHOD AND DEVICE FOR MEASURING IN SITU THE DISTANCE BETWEEN TWO SPECIFIC ELEMENTS IN A TUBULAR PIPE

(30) Priorité: 19.02.1999 FR 9902089
(43) Date de publication de la demande: 21.11.2001
(73) Titulaire: TECHNIP FRANCE, 92400 Courbevoie (FR)
(72) Inventeur: LEMBEYE, Philippe, F-76380 Montigny (FR)
(74) Mandataire: Bertrand, Didier
(86) Numéro de dépôt international: PCT/FR1999/002729
(87) Numéro de publication internationale: WO 2000/049398

(56) Documents cités:
- EP-A- 0 304 053
- GB-A- 2 102 565
- GB-A- 2 301 414
- US-A- 3 967 194
- US-A- 5 068 608
- US-A- 5 532 587

## Description

La présente invention concerne une méthode et un dispositif pour mesurer in situ la distance séparant deux éléments donnés dans une conduite tubulaire.

Une conduite flexible comporte généralement un embout à chaque extrémité. Les embouts sont des organes qui permettent de relier les conduites flexibles à des structures fixes telles qu'une structure flottant à la surface d'une mer et ancrée sur le fond marin ou encore une structure disposée sur le fond marin, comme par exemple une tête de puits ou un manifold. Des embouts peuvent être également utilisés pour raccorder des tronçons de conduite flexible lorsque cette dernière présente une grande longueur. Plus la longueur de la conduite est grande (plusieurs kilomètres) plus le nombre d'embouts intermédiaires ("mid-connector" en anglais) utilisés est élevé.

Les conduites visées par la présente invention sont celles qui sont dénommées "Rough Bore" et qui comprennent une carcasse comme élément le plus interne et sur laquelle est disposée une gaine interne d'étanchéité, du type décrit dans les normes API 17J et API 17B.

Généralement, une extrémité de la conduite est montée et fixée à l'intérieur de l'embout par des moyens appropriés qui sont bien connus et qui ne seront donc pas décrits.

Un embout présente deux fonctions, l'une externe et l'autre interne. La fonction externe consiste à relier l'embout à une structure considérée comme fixe, à l'aide d'une bride de raccordement par exemple. La fonction interne est assurée par une voûte et des moyens de serrage qui permettent de maintenir la continuité de l'étanchéité de la conduite flexible, le serrage de la gaine d'étanchéité interne sur la carcasse étant effectué au moyen d'un monocône par exemple. Le montage et la fixation d'une extrémité d'une conduite dans l'embout sont réalisés de telle sorte qu'une bague d'arrêt, soudée à l'extrémité de la carcasse, est située à une certaine distance de la voûte de l'embout.

Or, pendant toute la durée d'utilisation de la conduite, il est nécessaire de procéder à des mesures de la distance ("gap" en anglais) séparant la bague d'arrêt de la voûte de l'embout. En effet, un déplacement, même très faible, de la bague d'arrêt, solidaire de la carcasse, par rapport à la voûte de l'embout peut signifier un déplacement relatif de la gaine d'étanchéité interne par rapport à la voûte de pression. Un tel déplacement de la gaine d'étanchéité interne peut provoquer une perte d'étanchéité, ce qui serait préjudiciable au bon fonctionnement de la conduite. Un changement de la conduite serait alors indispensable. Le déplacement relatif de la gaine d'étanchéité interne par rapport à la voûte de pression peut avoir comme origine, une altération de la force de serrage exercée par le monocône sur la gaine d'étanchéité interne. Une modification des propriétés de la gaine d'étanchéité interne peut également entraîner un déplacement de ladite gaine, la modification pouvant être consécutive à des fluctuations en température du fluide circulant dans la conduite.

Dans les contrôles non destructifs d'une conduite, tels que décrits par exemple dans le brevet FR-B-95 08 635, il est possible d'utiliser un capteur de courants de Foucault pour la détection de défauts dans le produit à contrôler. Le contrôle par courants de Foucault consiste à monter un capteur sur une souris (PIG en anglais) qui est déplacée dans la conduite à l'aide de moyens appropriés tels qu'un fluide sous pression. Le capteur produit dans la conduite des courants de Foucault qui génèrent à leur tour un champ magnétique réactif variable, lequel influe sur l'impédance d'une bobine réceptrice placée à proximité de la surface à contrôler. En présence d'un défaut, la circulation des courants de Foucault est perturbée par le défaut, ce qui provoque des variations du champ réactif et donc de l'impédance de la bobine réceptrice. La mesure de l'impédance devrait permettre de détecter la présence de défauts dans le produit dont on ne connaît pas la position précise mais qu'on peut déterminer avec une approximation de l'ordre du mètre. Toutefois, l'amplitude du signal issu de la bobine réceptrice est fonction des dimensions du défaut et principalement en fonction de la profondeur et de la largeur du défaut. L'amplitude du signal dépend également des propriétés électromagnétiques des parois du défaut.

Toutefois, le capteur de courant de Foucault tel qu'utilisé habituellement ne peut permettre aisément la détermination de la dimension du défaut. Cette dimension ne pourrait être mesurée que si on connaît très exactement la vitesse de déplacement du capteur, au passage sur le défaut et que la vitesse soit constante. Une solution préconisée par des spécialistes consiste à amener et immobiliser un scanneur au droit du défaut à mesurer et à balayer le défaut à vitesse prédéterminée et constante. Une telle solution est difficile à mettre en oeuvre dans le cas d'une conduite de grande longueur et présentant un grand nombre de défauts à mesurer car elle nécessite notamment de localiser avec précision les défauts sur la conduite pour amener le scanneur au droit dudit défaut. Le balayage peut être effectué par des courants de Foucault, des ultrasons, ou autres.

Mais le balayage est limité à des longueurs de conduite flexible ne dépassant pas 5000 m en raison de l'effet cabestan qui est susceptible de se produire dans les parties courbes de la conduite flexible, l'effet cabestan pouvant induire à son tour un allongement de l'ombilical au bout duquel est monté le capteur.

Pour éviter les effets cabestan, on peut envisager des souris autonomes, portant les capteurs et les moyens d'acquisition et de stockage des données. Les capteurs montés sur ces souris autonomes peuvent être soit du type flux de fuite mais alors il se pose un problème difficile à résoudre lorsque le feuillard et/ou la bague est en matériau amagnétique, soit du type ultra sons et alors les impuretés disposées dans le défaut peuvent fausser la mesure de façon notable puisque le défaut peut être caché par ces impuretés, ledit défaut n'étant plus alors détecté.

Une roue codeuse n'est pas envisageable pour amener le scanneur sur le défaut car non seulement elle peut glisser sur la carcasse mais également elle est perturbée par la forme irrégulière de la paroi interne de la carcasse.

Une autre solution consisterait à procéder à un étalonnage du capteur de courant en fonction d'un type donné de défaut. Pour ce faire, il faut étalonner le capteur à l'aide de plusieurs conduites qui ne servent qu'à l'étalonnage mais qui doivent présenter très exactement le défaut qu'on souhaite tant dans ses dimensions que dans la structure et les matériaux constitutifs du flexible et de l'embout dans lesquels on désire détecter un défaut. Ces conduites d'étalonnage sont nouvelles chaque fois qu'on change de conduite à contrôler. Cela induit un coût considérable et un temps de mesure incluant le temps d'étalonnage très important. Dans la réalité, une telle solution est inenvisageable industriellement.

Il est également possible d'utiliser un capteur dit à faible résolution et procéder à une corrélation entre d'une part la forme et l'amplitude du signal et, d'autre part, la taille du défaut. Mais cela nécessite des techniques d'étalonnage fastidieuses et contraignantes. L'amplitude du signal traité augmente avec la largeur du défaut détecté.

Une autre technique consiste à utiliser un capteur dit à haute résolution qui permet de détecter séquentiellement les bords du défaut. Dans ce cas, l'amplitude du signal traité reste constante quelle que soit la largeur du défaut et cela n'éviterait pas un étalonnage comme indiqué précédemment.

La présente invention a pour but de remédier aux inconvénients précités des solutions connues et de proposer une méthode et un dispositif de mesure de la distance, avec précision, séparant la voûte de l'embout de la bague d'arrêt ou carcasse qui ne sont pas sensibles à la vitesse et/ou variations de vitesse de déplacement de la souris, qui ne nécessite pas de connaître à l'avance la position de la ou desdites distances, lorsque la conduite comprend plusieurs embouts sur toute sa longueur, qui soient compatibles avec l'environnement de mesure et qui minimisent la complexité de l'électronique de traitement et de stockage des données.

On a trouvé que contrairement à ce qui était admis par les spécialistes, que les courants de Foucault pouvaient être utilisés simplement en associant au moins deux capteurs montés en tandem et séparés par un intervalle fixe, ainsi que cela est décrit ci-après.

La présente invention a pour objet une méthode de mesure de la distance séparant une voûte d'un embout de l'extrémité d'une carcasse intérieure d'une conduite, telle que définie dans la revendication 1 annexée.

Un autre objet de la présente invention est un dispositif pour la mise en oeuvre de la méthode ci-dessus, et ce dispositif est tel que défini dans la revendication 3.

D'autres avantages et caractéristiques ressortiront mieux à la lecture de plusieurs modes de réalisation du dispositif pour la mise en oeuvre du procédé selon l'invention, ainsi que des dessins annexés sur lesquels :
- la figure 1 est une vue partiellement en coupe d'un embout et d'une extrémité d'une conduite,
- la figure 2 est une vue agrandie du détail A de la figure 1,
- la figure 3 est une vue partielle en coupe de la conduite dans laquelle est logée une souris,
- la figure 4 est une vue partielle et schématique d'un module spécifique se déplaçant dans la conduite,
- la figure 5 est une courbe de réponse des impédances fournie par un des capteurs du module spécifique,
- les figures 6a et 6b sont des réponses, après traitement, des réponses d'impédance des deux capteurs.

Les conduites flexibles concernées par la présente invention sont du type "Rough Bore", utilisables dans l'industrie pétrolière et qui comprennent de l'intérieur vers l'extérieur :
- une carcasse interne 1, formée d'un feuillard profilé, agrafé et spiralé avec un pas court, qui supporte les efforts d'écrasement de la conduite,
- une gaine d'étanchéité interne 2 qui est généralement extrudée sur ladite carcasse 1 et qui est supportée par cette dernière,
- une voûte de pression 3 constituée par au moins un fil métallique, par exemple en acier au carbone ferromagnétique, spiralé avec un pas court, et qui a pour fonction de supporter la composante circonférentielle des efforts de pression interne exercés par le fluide circulant dans la conduite,
- une ou plusieurs nappes d'armures 4, constituées de fils d'acier spiralés avec un pas long, entourant la voûte de pression 3 et qui sont destinées principalement à supporter les efforts axiaux de traction générés par la pression interne du fluide, le poids propre de la conduite, etc... Ces fils d'armures peuvent présenter différentes formes de section, par exemple des sections arrondies ou rectangulaires, les fils étant alors disposés les uns à côté des autres pour constituer une nappe, ou encore des sections de type agrafable telles que des sections zêta, en V, en T, en I, etc...., et
- une gaine externe d'étanchéité 5 en matériau thermoplastique.

La carcasse 1 dont l'épaisseur peut varier de quelques millimètres à 15 mm ou plus, est couramment réalisée par un feuillard en acier inoxydable austénitique conducteur d'électricité, tel que les nuances 316/316L ou 304/304L, ou d'autres nuances d'un acier. La carcasse 1 peut donc être amagnétique, légèrement magnétique ou magnétique.

Une extrémité d'une conduite ou d'une partie de conduite lorsque ces dernières sont constituées par plusieurs tronçons raccordés ensemble, est disposée à l'intérieur d'une voûte d'un embout. La mise en place et la fixation de ladite extrémité de conduite dans la voûte de l'embout sont bien connues des spécialistes et ne seront donc pas décrites dans le détail.

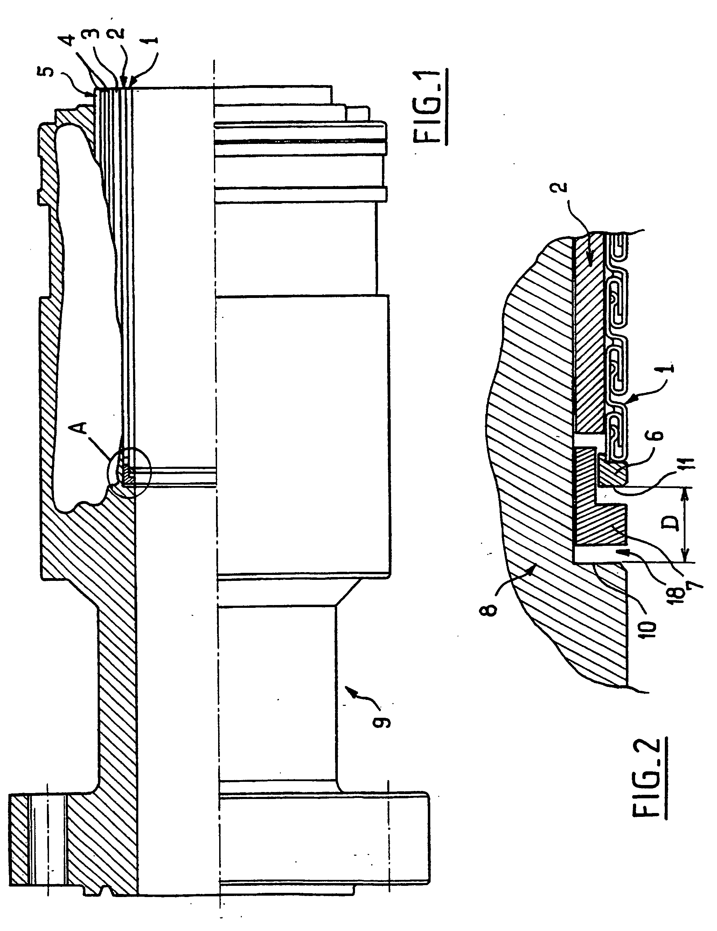

La carcasse 1, comme cela est représenté sur la figure 2, est terminée par une bague d'arrêt 6 en acier inoxydable, la bague d'arrêt 6 étant soudée à ladite carcasse 1. Une bague d'isolation électrique 7, en forme de L couché, est interposée entre la bague d'arrêt 6 et la voûte 8 d'un embout 9. La voûte 8 est réalisée dans un acier revêtu de nickel ou d'Inconel, conducteur, magnétique ou non.

Le dispositif selon l'invention est destiné à mesurer la distance D séparant l'épaulement 10 de la voûte d'embout 8 de la surface consécutive 11 de-la bague d'arrêt 6.

La méthode selon l'invention consiste à :
- déplacer, dans la conduite, une souris du type connu et comprenant à l'avant un module spécifique,
- détecter à l'aide d'un premier capteur du module spécifique les transitions entre la bague d'arrêt 6 et la voûte d'embout 8,
- détecter les mêmes transitions que précédemment au moyen d'un deuxième capteur prévu dans ledit module spécifique, lesdits capteurs étant séparés par un intervalle fixe et constant
- à mémoriser dans une mémoire les signaux délivrés par chacun des capteurs, puis à
- traiter lesdits signaux mémorisés pour déterminer la distance D entre les transitions, ces dernières étant délimitées dans l'exemple représenté par l'épaulement 10 et la surface 11.

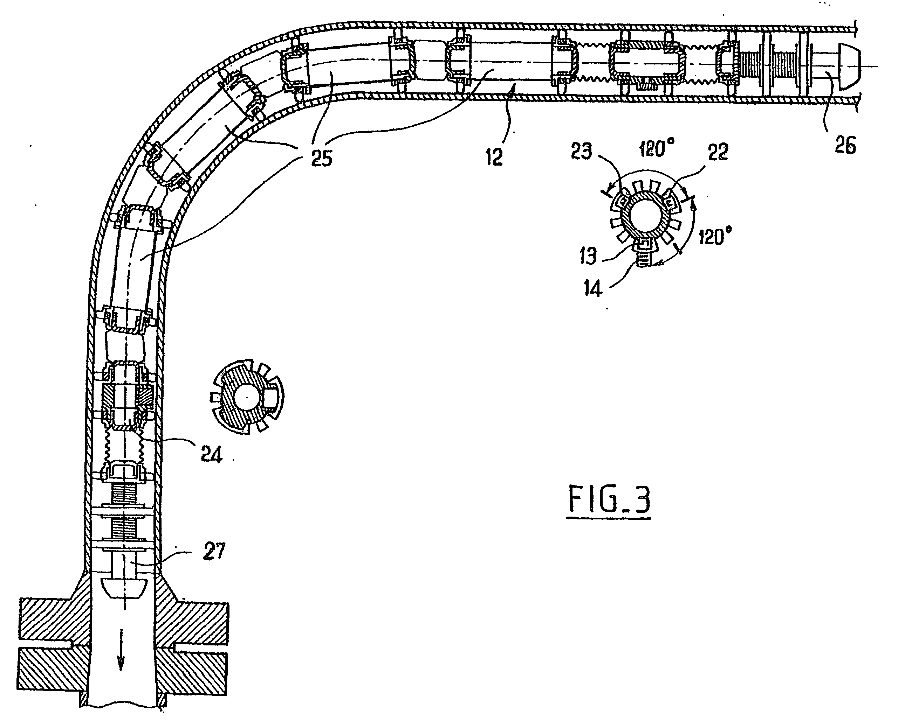

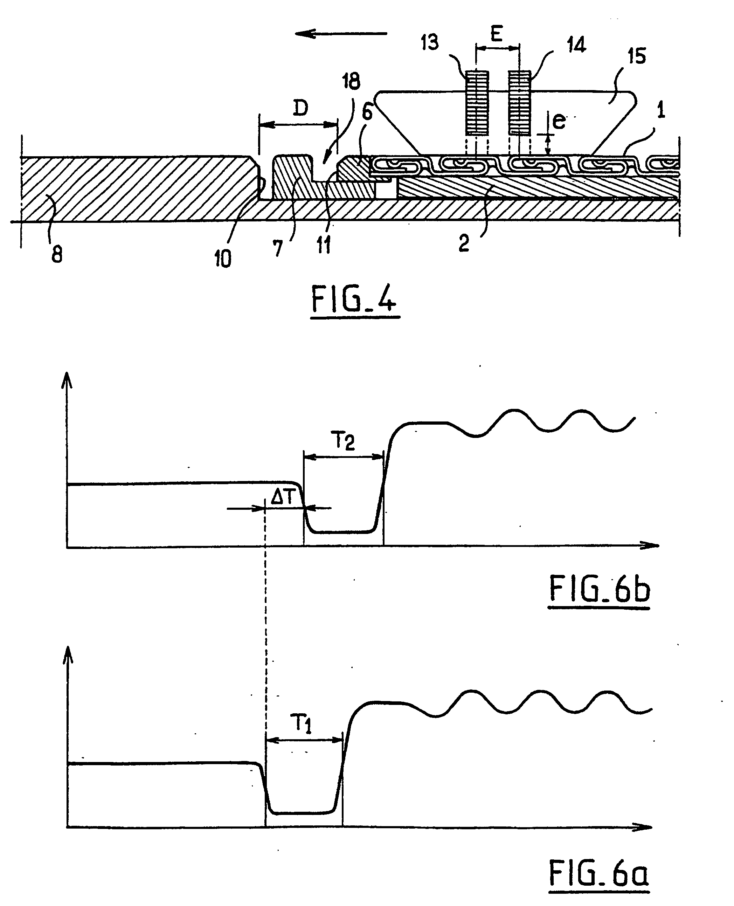

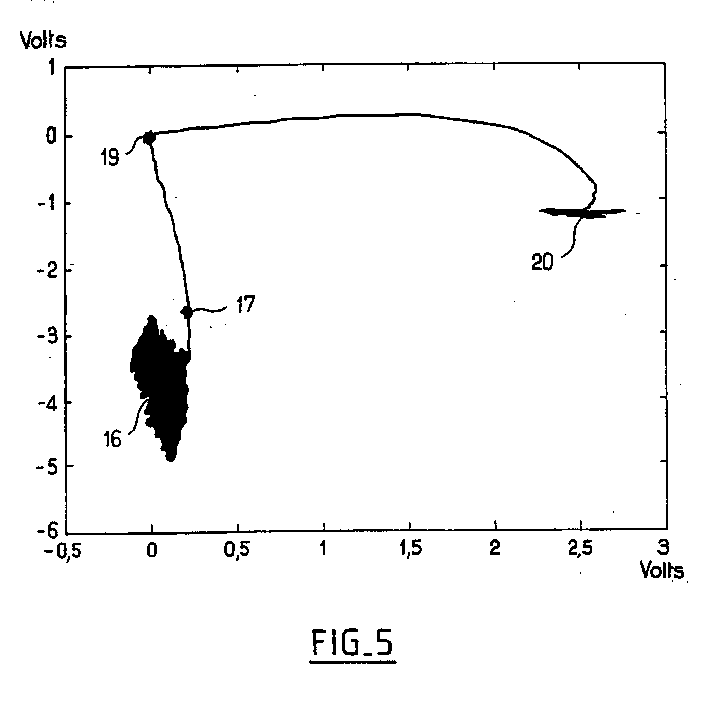

Un premier mode de réalisation d'un dispositif de mise en oeuvre de la méthode est représenté sur les figures 3 et 4. Dans cet exemple, la détermination de la distance D est effectuée depuis l'épaulement 10 vers la surface 11, étant précisé que la détermination entre la surface 11 et l'épaulement 10 peut être effectuée, en fonction de la première transition détectée par le premier capteur.

Dans ce mode de réalisation, un support constitué par une souris 12 sur laquelle sont montés un premier capteur 13 et un deuxième capteur 14, séparés par un intervalle fixe et constant E. Les deux capteurs sont de même nature, par exemple des capteurs de courants de Foucault montés éventuellement sur un support ou ski 15 intégré dans un module spécifique. Les deux capteurs 13 et 14 sont situés à une certaine distance de la voûte 8 ou de la bague d'arrêt 6, telle que l'entrefer e ménagé entre les capteurs et la voûte 8 soit compris entre 3 et 15 mm. Chaque capteur 13, 14 travaille en mode absolu à une haute fréquence comprise entre 10kHz et 3 MHz, de manière à optimiser le rapport signal/bruit et minimiser ainsi les effets des variations des caractéristiques électromagnétiques, de sorte que l'amplitude du signal délivré par les capteurs soit indépendante de la vitesse de passage de la souris dans la gamme des vitesses de commande comprise entre 0,1 et 3 m/s. Chaque capteur 13, 14 est relié à des moyens électroniques usuels dans la technique des courants de Foucault, lesquels moyens électroniques fournissent les composantes X et Y du signal délivré par chaque capteur dans un plan d'impédance. Les signaux X et Y de chaque capteur 13, 14 sont ensuite échantillonnés, numérisés et mémorisés en vue d'un traitement différé des données en fin de mesures ou d'inspection.

Pour une distance D égale à environ 50 mm et pour une vitesse de déplacement du ski 15 faible, par exemple de l'ordre de 0,2 m/s, mais dont l'accélération est supposée constante pendant les mesures entre les transitions 10 et 11, on procède à une excitation de chaque capteur pendant une relative longue période de temps, afin d'être sûr que toute la distance D est couverte par les mesures. De préférence, l'excitation des capteurs est effectuée de façon permanente alors que la mémorisation des signaux délivrés par les capteurs est limitée dans le temps, par exemple pendant une seconde, afin d'éviter une saturation des mémoires.

Le premier capteur 13 détecte successivement les transitions 10 et 11, les signaux étant générés de manière permanente.

Lorsque le premier capteur 13 est situé en face de la carcasse 1, les signaux délivrés par ledit capteur et pour une position donnée, rencontrent les diverses couches des spires agrafées de la carcasse 1, la gaine d'étanchéité interne 2 et la voûte 8 de l'embout, l'impédance complexe desdits signaux étant matérialisée par le nuage 16 de la figure 5 qui représente l'impédance dans un plan complexe (réel et imaginaire). Lorsque le capteur 13 est situé en face de la bague d'arrêt 6, l'impédance correspondante des signaux délivrés par le capteur 13 est matérialisée par le point ou zone 17 de la figure 5. Lorsque le même capteur 13 parvient en face de l'intervalle 18 (de distance D) ménagé entre la bague d'arrêt 6 et l'épaulement 10 de la voûte 8 d'embout, l'impédance des signaux délivrés par ledit capteur 13 varie brutalement et elle est matérialisée par le point ou zone 19 sur la figure 5, la bague d'isolation 7 n'influant pas sur l'impédance en raison du matériau utilisé. Pendant la traversée de l'intervalle 18, l'impédance des signaux ne varie pratiquement pas jusqu'à ce que le capteur parvienne en regard de la transition constituée par l'épaulement 10 de la voûte 8. Cette impédance sur la voûte 8 est matérialisée par le nuage de points 20.

La représentation d'impédance de l'autre capteur 14 n'est pas représentée mais elle est identique à celle de la figure 5 à un décalage près dans le temps correspondant à la distance E séparant les deux capteurs 13 et 14. Les capteurs 13 et 14 sont, par exemple, constitués chacun par une bobine enroulée sur un noyau en ferrite ou par une bobine coaxiale courte.

Le traitement de la variation aux transitions à détecter de l'impédance complexe de la ou des courbes analogues à celle de la figure 5 peut être effectué par tout moyen approprié tel qu'une analyse spectrale par transformée de Fourrier ou une inversion d'un modèle mathématique basé sur les équations de MAXWELL, le but étant d'obtenir pour chaque courbe d'impédance une réponse du type représentée sur les figures 6a et 6b. Sur la réponse de la figure 6a, qui correspond au capteur 13, il est possible de mesurer le temps T₁ mis par le capteur 13 à parcourir la distance D. Comme on connaît le décalage en temps ΔT entre les deux capteurs pour détecter la première transition rencontrée (épaulement 10) et la distance constante E qui sépare les deux capteurs, on peut déterminer la vitesse V = E/ΔT. Par ailleurs, la distance D est donnée par la formule D = V x T₁ = V x T₂ puisque la vitesse de déplacement V est considérée comme constante dans l'intervalle 18.

Dans un autre mode de réalisation, on utilise trois et de préférence quatre capteurs dont deux sont montés en tandem sur une même génératrice dite principale ainsi que cela est représenté sur la figure 3, les deux autres capteurs 22, 23 étant disposés sur des génératrices à 120° les unes des autres par rapport à la génératrice principale. Les réponses des capteurs permettent de déterminer avec précision la variation de la distance initiale D sur plusieurs génératrices de ladite conduite lorsque la distance D varie d'une génératrice à une autre, notamment lorsque le déplacement de la gaine interne de la conduite n'est pas uniforme sur toute la circonférence.

La disposition des quatre capteurs 13, 14, 22 et 23 est représentée sur la coupe de la souris située au haut et à droite sur la figure 3.

La souris 12 qui est connue en soi est représentée sur la figure 3 mais comprend en outre selon l'invention un trigger 24 qui est monté en tête. Le trigger 24 qui peut être constitué par exemple par un capteur de courants de Foucault a pour objet de détecter l'entrée de l'embout, de manière à déclencher la mémorisation des signaux générés par les capteurs de mesure dans au moins une mémoire 25 et, de préférence, dans une batterie de mémoires pour qu'on puisse mémoriser un grand nombre de données. Le traitement des données mémorisées est effectué après avoir remonté la souris 12 à la surface, ladite souris étant du type réversible et comportant à l'arrière une autre tête 26 analogue à la tête avant 27. C'est au cours du traitement que les courbes d'impédance de la figure 5 et les courbes de réponse des figures 6a et 6b sont élaborées, la mesure de la distance D ou des autres distances à mesurer étant effectuées comme indiqué précédemment.

Dans un autre mode de réalisation, non représenté, il est possible d'utiliser en lieu et place d'une souris un ombilical ou tout autre organe équivalent qui sert de support aux capteurs et qui est introduit dans la conduite flexible et qui comporte à l'extrémité avant un trigger pour détecter l'entrée de l'embout ou de chacun des embouts équipant ladite conduite flexible. Dès que les capteurs de Foucault sont initialisés, ils génèrent des signaux qui sont transmis en surface, à l'extérieur de la conduite flexible, au moyen de câbles ou conducteurs appropriés.

Les signaux générés par les capteurs de Foucault sont enregistrés et stockés dans une ou plusieurs mémoires en vue d'un traitement ultérieur ou en temps réel. Une telle solution permet, grâce au trigger qui déclenche la mémorisation des signaux, d'éviter le déplacement dans la conduite flexible d'une grande mémoire qui est d'autant plus importante que le nombre d'intervalles à mesurer est élevé. En effet, en dissociant la ou les mémoires des capteurs de Foucault, il devient possible de traiter et/ou de mesurer un grand nombre d'intervalles sans être limité par les mémoires de stockage des données ou des signaux générés par les capteurs de Foucault puisqu'en tout état de cause lesdites mémoires de stockage sont externalisées de la conduite flexible et ne sont plus portées par la souris, l'excitation desdites mémoires étant déclenchée par le trigger.

Il est à noter que la présente invention permet de limiter l'influence perturbatrice des variations de la perméabilité magnétique µ et de la conductivité électrique σ des matériaux utilisés tout en étant sensible aux variations géométriques du ou des défauts à détecter en surface interne de la conduite flexible et non pas dans l'épaisseur des matériaux constitutifs de ladite conduite.

Lorsque la vitesse de déplacement des capteurs 13 et 14 varie dans l'intervalle 18, on peut déterminer la vitesse instantanée à chaque passage sur une transition 10 ou 11. Avec les deux vitesses instantanées mesurées au passage de chaque transition, on peut déterminer l'accélération dans l'intervalle, ladite accélération étant alors considérée comme constante dans l'intervalle 18.

## Revendications

1. Méthode pour mesurer la distance séparant une voûte (8) d'au moins un embout (9) et un élément (6) donné d'une extrémité d'une partie terminale d'une conduite, du type consistant à :
- déplacer des moyens de mesure (13, 14) autonomes à l'intérieur de ladite conduite,
- effectuer au moins une séquence de mesures au cours du déplacement desdits moyens de mesure dans l'embout,
- mémoriser sous forme de signaux lesdites mesures dans au moins une mémoire (25),
- traiter lesdits signaux,
**caractérisée en ce qu'**elle consiste en outre à :
- utiliser comme moyens de mesure au moins deux capteurs (13, 14) de Foucault à haute résolution disposés sur un support mobile, la distance entre ces deux capteurs étant constante,
- détecter en temps réel avec chacun desdits capteurs (13, 14) le passage des transitions consécutives (10, 11) entre la voûte (8) de l'embout et l'extrémité de la partie terminale de la conduite,
- déclencher les mesures pendant un temps prédéterminé entre les détections desdites transitions, et à
- traiter les signaux mémorisés pour déterminer le décalage en temps (ΔT) entre les deux capteurs pour détecter une transition donnée et le temps (T1, T2) mis par au moins l'un des capteurs pour parcourir la distance (D) séparant deux transitions consécutives, et déduire des valeurs obtenues et de la distance connue existant entre les deux capteurs, ladite distance (D) séparant deux transitions successives.

2. Méthode selon la revendication 1, **caractérisée en ce que** la détection des transitions consécutives est effectuée en mesurant la variation de l'impédance complexe des signaux dans l'intervalle (18) délimité entre lesdites transitions (10,11).

3. Dispositif pour la mise en oeuvre de la méthode selon l'une des revendications 1 ou 2, du type comprenant un support (12) qui est propulsé à l'intérieur de la conduite par des moyens tels qu'un fluide sous pression, au moins un capteur de courants de Foucault monté sur ledit support, des moyens de mémorisation (25) des signaux délivrés par ledit capteur, **caractérisé en ce qu'**il comporte au moins deux capteurs (13, 14) de Foucault à haute résolution qui détectent en temps réel les transitions (10, 11) situées de part et d'autre d'un intervalle (18) délimité entre la voûte (8) de l'embout et l'extrémité de la partie terminale de la conduite, lesdits capteurs étant situés à une faible distance (e) de la paroi interne de la conduite, et des moyens pour traiter les signaux mémorisés pour déterminer le décalage en temps (ΔT) entre les deux capteurs pour détecter une transition donnée et le temps (T1, T2) mis par au moins l'un des capteurs pour parcourir la distance (D) séparant deux transitions consécutives, et pour déduire la distance (D) séparant deux transitions consécutives à l'aide des valeurs mesurées (ΔT, et T1 et/ou T2) à partir des signaux mémorisés et de la distance connue séparant les deux capteurs sur le support.

4. Dispositif selon la revendication 1, **caractérisé en ce que** les capteurs (13, 14) sont disposés parallèlement à une génératrice de la paroi interne de la conduite et travaillent à une haute fréquence comprise entre 10 kHz et 3 MHz.

5. Dispositif selon les revendications 3 ou 4, **caractérisé en ce que** les capteurs (13, 14) sont situés à une distance de la paroi interne de la conduite, comprise entre 3 et 15 mm et **en ce qu'**ils travaillent en mode absolu.

6. Dispositif selon l'une des revendications 5 à 7, **caractérisé en ce que** les capteurs sont constitués par une ou plusieurs bobines enroulées sur un noyau en ferrite ou par une bobine coaxiale courte.

7. Dispositif selon l'une des revendications 3 à 6, **caractérisé en ce que** les deux capteurs sont montés sur un support commun (15) et séparés l'un de l'autre par une distance fixe (E) et **en ce que** l'accélération du support est constante pendant les mesures.

8. Dispositif selon l'une des revendications 5 à 9, **caractérisé en ce qu'**il comprend quatre capteurs(13, 14, 22, 23) dont deux sont situés sur une même génératrice principale de la paroi interne de la conduite et dont chacun des deux autres est situé sur une génératrice située à 120° de la génératrice principale.

9. Dispositif selon l'une des revendications 3 à 8, **caractérisé en ce que** la mesure du ou des capteurs utilisés en mode absolu est couplée avec un traitement en temps réel des signaux qui sont analysés par une analyse spectrale par transformée de Fourrier, de manière à identifier des changements brutaux du spectre lors du passage entre lélément donné et la voûte de l'embout.

10. Dispositif selon la revendication 3, **caractérisé en ce qu'**il comprend en outre un détecteur (24) d'entrée de l'embout monté à l'avant dudit support, les signaux générés par ledit détecteur déclenchant la mémorisation des signaux délivrés par les capteurs.

11. Dispositif selon la revendication 10, **caractérisé en ce que** le détecteur est constitué par un trigger.

## Patentansprüche

1. Verfahren zum Messen des Abstandes zwischen einer Innenwölbung (8) mindestens eines Ansatzstücks (9) und einem gegebenen Element (6) eines Endes eines Endabschnitts einer Leitung, das darin besteht,
- unabhängige Messmittel ( 13, 14) im Inneren dieser Leitung zu verschieben,
- mindestens eine Sequenz von Messungen während des Verschiebens dieser Messmittel in dem Endstück auszuführen,
- diese Messungen in mindestens einem Speicher (25) als Signale zu speichern,
- diese Signale zu verarbeiten,
**dadurch gekennzeichnet,**
**dass** es ferner darin besteht,
- als Messmittel mindestens zwei Foucaultsche Sensoren (13, 14) mit hoher Auflösung zu verwenden, die auf einem bewegbaren Träger angeordnet sind, wobei der Abstand zwischen diesen beiden Sensoren konstant bleibt,
- mit jedem dieser Sensoren (13, 14) in Realzeit den Verlauf der aufeinander folgenden Übergänge (10, 11) zwischen der Innenwölbung (8) des Ansatzstücks (9) und dem Ende des Endabschnitts der Leitung abzutasten,
- die Messungen während einer vorbestimmten Zeit zwischen den Abtastungen dieser Übergänge auszulösen, und
- die gespeicherten Signale zu verarbeiten, um die zeitliche Verschiebung (ΔT) zwischen den beiden Sensoren zur Abtastung eines gegebenen Übergangs sowie die Zeit (T1, T2), die zumindest einer der beiden Sensoren braucht, um die Strecke (D) zwischen zwei aufeinander folgenden Übergängen zu durchlaufen, zu bestimmen und aus den erhaltenen Werten und dem bekannten Abstand zwischen den beiden Sensoren diesen Abstand (D) zwischen zwei aufeinander folgenden Übergängen abzuleiten.

2. Verfahren nach Anspruch 1,
**dadurch gekennzeichnet,**
**dass** die Abtastung der aufeinander folgenden Übergänge erfolgt, indem die Veränderung der komplexen Impedanz der Signale in dem Intervall (18) gemessen wird, das zwischen den genannten Übergängen (10, 11) liegt.

3. Vorrichtung zur Ausführung des Verfahrens nach einem der Ansprüche 1 oder 2 mit einem Träger (12), der im Inneren der Leitung durch Mittel wie z. B. ein unter Druck befindliches Fluid vorwärts getrieben wird, mit mindestens einem auf diesem Träger montierten Sensor für Foucaultsche Ströme, mit Speichermitteln (25) für die von diesem Sensor abgegebenen Signale,
**dadurch gekennzeichnet,**
**dass** sie mindestens zwei Foucaultsche Sensoren (13, 14) mit hoher Auflösung aufweist, die in Realzeit die Übergänge (10, 11) abtasten, die sich beiderseits eines Intervalls (18) befinden, welches zwischen der Innenwölbung (8) des Ansatzstücks (9) und dem Ende des Endabschnitts der Leitung liegt, wobei diese Sensoren sich in geringem Abstand (e) von der Innenwand der Leitung befinden, sowie Mittel zur Verarbeitung der gespeicherten Signale aufweist, um die zeitliche Verschiebung (ΔT) zwischen den beiden Sensoren zur Abtastung eines gegebenen Übergangs sowie die Zeit (T1, T2), die zumindest einer der beiden Sensoren braucht, um die Strecke (D) zwischen zwei aufeinander folgenden Übergängen zu durchlaufen, zu bestimmen, und um mittels der gemessenen Werte (ΔT und T1 und/oder T2) aus den gespeicherten Signalen und dem bekannten Abstand zwischen den beiden Sensoren auf dem Träger den Abstand (D) zwischen zwei aufeinander folgenden Übergängen abzuleiten.

4. Vorrichtung nach Anspruch 3,
**dadurch gekennzeichnet,**
**dass** die Sensoren (13, 14) parallel zu einer Mantellinie der Innenwand der Leitung angeordnet sind und mit einer hohen Frequenz von 10 kHz bis 3 MHz arbeiten.

5. Vorrichtung nach den Ansprüchen 3 oder 4,
**dadurch gekennzeichnet,**
**dass** die Sensoren (13, 14) sich in einem Abstand von 3 bis 15 mm zu der Innenwand der Leitung befinden, und dass sie im Absolutmodus arbeiten.

6. Vorrichtung nach einem der Ansprüche 3 bis 5,
**dadurch gekennzeichnet,**
**dass** die Sensoren aus einer oder mehreren auf einen Eisenkern gewickelten Spulen oder aus einer kurzen koaxialen Spule bestehen.

7. Vorrichtung nach einem der Ansprüche 3 bis 6,
**dadurch gekennzeichnet,**
**dass** die beiden Sensoren auf einem gemeinsamen Träger (15) angebracht und durch einen festen Abstand (E) voneinander getrennt sind, und dass die Beschleunigung des Trägers wahrend der Messungen konstant ist.

8. Vorrichtung nach einem der Ansprüche 3 bis 7,
**dadurch gekennzeichnet,**
**dass** sie vier Sensoren (13, 14, 22, 23) aufweist, von denen sich zwei auf der gleichen Haupt-Mantellinie der Innenwand der Leitung befinden und von denen sich die beiden anderen jeweils auf einer Mantellinie befinden, die mit 120° zu der Haupt-Mantellinie verläuft.

9. Vorrichtung nach einem der Ansprüche 3 bis 8,
**dadurch gekennzeichnet,**
**dass** die Messung des oder der im Absolutmodus verwendeten Sensoren mit einer Verarbeitung der Signale in Realzeit gekoppelt ist, wobei diese durch eine Spektralanalyse durch Fourier-Transformation analysiert werden, so dass abrupte Änderungen des Spektrums beim Durchgang zwischen dem gegebenen Element und der Innenwölbung des Ansatzstücks identifiziert werden.

10. Vorrichtung nach Anspruch 3,
**dadurch gekennzeichnet,**
**dass** sie ferner einen Detektor (24) für den Einlass des Ansatzstücks aufweist, der vom an dem genannten Träger angebracht ist, wobei die von diesem Detektor erzeugten Signale das Speichern der von den Sensoren abgegebenen Signalen auslösen.

11. Vorrichtung nach Anspruch 10,
**dadurch gekennzeichnet,**
**dass** der Detektor von einem Trigger gebildet wird.

## Claims

1. Method for measuring the gap separating a vault (8) of at least one end fitting (9) and a given element (6) of one end of a terminal part of a pipe, of the type consisting in:
- moving autonomous measuring means (13, 14) inside the said pipe,
- carrying out at least one series of measurements during the movement of the said measurement means in the end fitting,
- storing the said measurements in the form of signals in at least one memory (25),
- processing the said signals,
**characterized in that** it furthermore consists in:
- using as measurement means at least two sensors (13,14) based on eddy-current techniques, having a high resolution and mounted on a moving support at a constant distance from one another.
- detecting, in real time, with each of said sensors (13,14), the passage of the consecutive transitions (10, 11) between the vault (8) of the end fitting and the end of the terminal part of the pipe,
- triggering the measurements for a predetermined time between the detections of the said transitions and
- processing the stored signals in order to determine the timeshift (ΔT) between the two sensors to detect a given transition and the time (T1, T2) taken by at least one of the sensors to cross the gap (D) separating two consecutive transitions, and derive from the obtained values and the known distance between the two sensors the said gap (D) separating two consecutive transitions.

2. Method according to Claim 1, **characterized in that** the consecutive transitions are detected by measuring the variation in the complex impedance of the signals within the interval (18) delimited between the said transitions (10, 11).

3. Device for implementing the method according to either of Claims 1 and 2, of the type comprising a support (12) which is propelled inside the pipe by means such as a pressurized fluid, at least one eddy-current sensor mounted on the said support, and means (25) for storing the signals delivered by the said sensor, **characterized in that** it includes at least two high-resolution eddy-current sensors (13, 14) which detect in real time the transitions (10, 11) located on either side of an interval (18) delimited between the vault (8) of the end fitting and the end of the terminal portion of the pipe, the said sensors being located a short distance (e) from the internal wall of the pipe, and means for processing the stored signals in order to determine the timeshift (ΔT) between the two sensors to detect a given transition and the time (T1,T2) taken by at least one of the sensors to cross the gap (D) separating two consecutive transitions, for deriving the gap (D) separating two consecutive transitions with the help of the measured values (ΔT and T1 and/or T2) from the stored signals and the known distance separating the two sensors on the support.

4. Device according to Claim 1, **characterized in that** the sensors (13, 14) are arranged so as to be parallel to a generatrix of the internal wall of the pipe and work at a high frequency of between 10 kHz and 3 MHz.

5. Device according to either of Claims 3 and 4,
**characterized in that** the sensors (13, 14) are located at a distance from the internal wall of the pipe of between 3 and 15 mm and **in that** they work in absolute mode.

6. Device according to one of Claims 5 to 7, **characterized in that** the sensors consist of one or more coils wound on a ferrite core or of a short coaxial coil.

7. Device according to one of Claims 3 to 6, **characterized in that** the two sensors are mounted on a common support (15) and separated from each other by a fixed gap (E) and **in that** the acceleration of the support is constant during the measurements.

8. Device according to one of Claims 5 to 9, **characterized in that** it comprises four sensors (13, 14, 22, 23), two of which are located on the same principal generatrix of the internal wall of the pipe and each of the other two sensors is located on a generatrix located at 120° from the principal generatrix.

9. Device according to one of Claims 3 to 8, **characterized in that** the measurement by the sensor or sensors used in absolute mode is coupled with real-time processing of the signals which are analysed by Fourier transform spectral analysis so as to identify sudden changes in the spectrum during passage between the given element and the vault of the end fitting.

10. Device according to Claim 3, **characterized in that** it furthermore comprises a detector (24) which detects the entrance of the end fitting mounted at the front of the said support, the signals generated by the said detector triggering the storing of the signals delivered by the sensors.

11. Device according to Claim 10, **characterized in that** the detector consists of a trigger.
